# EUROPÄISCHE PATENTSCHRIFT

(11) **EP 2 975 477 B1**
(45) Veröffentlichungstag und Bekanntmachung des Hinweises auf die Patenterteilung: **17.04.2019**
(21) Anmeldenummer: 14177262.4
(22) Anmeldetag: 16.07.2014
(51) Int. Cl.: G05B 19/418, H04L 29/12

(54) **Verfahren zur Registrierung von Gerätenamen aus einem industriellen Automatisierungssystem bei einem Kommunikationsnetz-Namensdienst, zentraler und dezentraler Namensdienst-Agent**
Method for registering device names from an industrial automation system in a communication network name service, central and decentralized name service agent
Procédé d'enregistrement d'un nom d'appareil à partir d'un système d'automatisation industriel pour un service de dénomination de réseau de communication, représentant de service de dénomination central et décentralisé

(43) Veröffentlichungstag der Anmeldung: 20.01.2016
(73) Patentinhaber: Siemens Aktiengesellschaft, 80333 München (DE)
(72) Erfinder: Albrecht, Harald, 90475 Nürnberg (DE)

(56) Entgegenhaltungen:
- WO-A1-2007/144364
- US-A1- 2003 126 241
- US-A1- 2006 235 997
- US-B2- 8 065 408

## Beschreibung

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden. US 2003/0126241 A1 und US 8,065,408 B2 offenbaren zwei Verfahren zur Registrierung von Gerätenamen aus einem industriellen Automatisierungssystem bei einem Kommunikationsnetz-Namensdienst.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

Aus der älteren europäischen Patentanmeldung mit dem Anmeldeaktenzeichen 14166194.2 ist ein Verfahren zur Konfiguration eines Kommunikationsgeräts innerhalb eines industriellen Automatisierungssystems bekannt, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

Die ältere europäische Patentanmeldung mit dem Anmeldeaktenzeichen 14166376.5 betrifft ein Verfahren zur Bereitstellung eines Namensdienstes innerhalb eines industriellen Kommunikationssystems, bei dem IPv6-Präfixe durch Router mittels Nachrichten mit Router-Bekanntgaben (Router Advertisements) in jeweils unterlagerten Teilnetzen verbreitet werden. Die Router-Bekanntgaben umfassen einen topologischen bzw. hierarchischen Namensbestandteil des jeweiligen Routers, wobei der topologische bzw. hierarchische Namensbestandteil einer räumlichen oder hierarchischen Anordnung des jeweiligen Routers zugeordnet ist. Router-Bekanntgaben mit Namensinformationen aus überlagerten Teilnetzen werden durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet. Aus topologischen bzw. hierarchischen Namensbestandteilen und einem innerhalb ihres jeweiligen Teilnetzes eindeutigen Namensbestandteil erzeugen Kommunikationsendgeräte, also Kommunikationsgeräte ohne Routing-Funktionen, selbständig ihren Gerätenamen. Hierdurch wird eine einfache Inbetriebnahme von Serienmaschinen ermöglicht, da aufgrund oben genannter automatischer Vervollständigung lediglich auf Maschinenebene eindeutige Namen auszuwählen sind.

Insbesondere in IPv6-Kommunikationsnetzen müssen bei einer Nutzung von durch ein Domain Name System (DNS) bereitgestellten Namensdiensten, wie DynDNS, und selbständig durch Kommunikationsgeräte erzeugten Kommunikationsnetzadressen nach einem Gerätetausch neu bzw. aktualisierte Gerätename-Adress-Zuordnungen durch den jeweiligen Namensdienst registriert werden. Für industrielle Automatisierungssysteme mit Serienmaschinen, die jeweils mehrere gleichartige Maschinen innerhalb eines Subnetzes umfassen, ist ein Verzicht auf eine selbständige Adresskonfiguration, wie Stateless Address Autoconfiguration (SLAAC), jedoch problematisch, da für jede einzelne Maschine einer Serienmaschine üblicherweise eine eigene Kommunikationsnetzadresse benötigt wird. Zudem ist eine statische Vergabe von Kommunikationsnetzadressen umständlich und fehleranfällig. Bei einer Vorkonfigurierung von Serienmaschinen müssen Kommunikationsnetzadressen vor Auslieferung und Inbetriebnahme sorgfältig geplant werden. Spätere Änderungen, beispielsweise aufgrund von Konfigurations- oder Planungsfehlern, lassen sich nur äußerst schwer umsetzen. Bei einer Verwendung von DHCP-Servern (Dynamic Host Configuration Protocol) wird zur Aktualisierung von Gerätename-Adress-Zuordnungen zwischen dem jeweiligen DHCP-Server und Domain Name System eine Kopplung benötigt, deren Realisierung mit einem erheblichen Aufwand verbunden ist.

Der vorliegenden Erfindung liegt die Aufgabe zugrunde, ein zuverlässiges Verfahren zur Registrierung von Gerätenamen aus einem industriellen Automatisierungssystem bei einem Kommunikationsnetz-Namensdienst zu schaffen, das eine selbständige Adresskonfiguration durch Kommunikationsgeräte und einen einfachen Gerätetausch ermöglicht, und geeignete Vorrichtungen zur Realisierung des Verfahrens anzugeben.

Diese Aufgabe wird erfindungsgemäß durch ein Verfahren mit den in Anspruch 1 angegebenen Merkmalen, durch einen zentralen Namensdienst-Agenten mit den in Anspruch 11 angegebenen Merkmalen und einen dezentralen Namensdienst-Agenten mit den in Anspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Registrierung von Gerätenamen aus einem industriellen Automatisierungssystem bei einem Kommunikationsnetz-Namensdienst wird mittels einer Regelbasis geräteindividuell festgelegt, für welche Kommunikationsgeräte des industriellen Automatisierungssystems eine Registrierung ihres jeweiligen Gerätenamens beim Kommunikationsnetz-Namensdienst zulässig bzw. erforderlich ist. Der Kommunikationsnetz-Namensdienst wird vorzugsweise durch ein Internetprotokoll-basiertes Domain Name System bereitgestellt. Die Regelbasis kann beispielweise mittels eines Projektierungssystems für das industrielle Automatisierungssystem festgelegt und an einen zentralen Namensdienst-Agenten des industriellen Automatisierungssystems bereitgestellt werden. Mittels geräteseitiger dezentraler Namensdienst-Agenten innerhalb des industriellen Automatisierungssystems werden Kommunikationsnetzadressen von Kommunikationsgeräten an den zentralen Namensdienst-Agenten gemeldet.

Der zentrale Namensdienst-Agent überprüft erfindungsgemäß bei einer Meldung einer Kommunikationsnetzadresse eines Kommunikationsgeräts - beispielsweise in Folge einer Inbetriebnahme bzw. eines Austausches - anhand der Regelbasis, ob eine Name-Adress-Zuordnung eines Kommunikationsgeräts beim Kommunikationsnetz-Namensdienst zu registrieren ist. Der zentrale Namensdienst-Agent übermittelt bei einer zu registrierenden Name-Adress-Zuordnung eine die Name-Adress-Zuordnung umfassende Registrierungsanforderung an den Kommunikationsnetz-Namensdienst. Innerhalb des industriellen Automatisierungssystems übermittelt nur der zentrale Namensdienst-Agent Registrierungsanforderungen zur Verarbeitung an den Kommunikationsnetz-Namensdienst. Vorzugsweise melden die dezentralen Namensdienst-Agenten Kommunikationsnetzadressen entsprechend Multicast Domain System Protocol an den zentralen Namensdienst-Agenten innerhalb des industriellen Automatisierungssystems.

Durch den zentralen Namensdienst-Agenten ergeben sich während Konfiguration und Betrieb des industriellen Automatisierungssystems erhebliche Vereinfachungen, da beispielsweise eine Konfiguration eines DynDNS-Anbieters sowie eine Hinterlegung erforderlicher Authentifizierungsinformationen für den Kommunikationsnetz-Namensdienst nur einmalig an genau einer Stelle erforderlich ist.

Entsprechend einer bevorzugten Ausgestaltung des erfindungsgemäßen Verfahrens konfigurieren sich die Kommunikationsgeräte des industriellen Automatisierungssystems hinsichtlich ihrer Kommunikationsnetzadressen selbständig anhand von Konfigurationsinformationen, die mittels Routerbekanntgaben (Router Advertisements) innerhalb ihres jeweiligen Teilnetzes verbreitet werden. Vorzugsweise sind die Routerbekanntgaben entsprechend Internet Control Message Protocol, Version 6 übermittelte Router Advertisements, die ein Präfix umfassen, das von den Kommunikationsgeräten des industriellen Automatisierungssystems zur Bildung ihrer jeweiligen Kommunikationsnetzadresse entsprechend Internet Protocol, Version 6 für eine Stateless Address Autoconfiguration verwendet wird. Damit kann eine dezentrale autonome IPv6-Adresserzeugung, insbesondere SLAAC, in vollem Umfang realisiert werden. Bei einem Gerätetausch sind also keine weiteren Aktionen als der reine Gerätetausch erforderlich. Darüber hinaus ist ein Verzicht auf DHCP-Server möglich.

Vorzugsweise umfasst nur der zentrale Namensdienst-Agent innerhalb des industriellen Automatisierungssystems Konfigurationsdaten für eine Anforderung einer Registrierung von Name-Adress-Zuordnungen beim Kommunikationsnetz-Namensdienst. Damit lässt sich ein Schutz vertraulicher Authentifizierungsinformationen einfach umzusetzen. Durch eine zentrale regelbasierte Beantragung einer Registrierung von lokalen Gerätenamen in einem übergeordneten Kommunikationsnetz-Namensdienst, der beispielsweise global verfügbar sein kann, lässt sich die Registrierung der Gerätenamen wirksam zentral überwachen. Darüber hinaus kann der zentrale Namensdienst-Agent Registrierungsanforderungen aus dem industriellen Automatisierungssystem aggregieren und eine Verarbeitung von Registrierungsanforderungen durch den Kommunikationsnetz-Namensdienst hinsichtlich ihres Zustands protokollieren. Damit kann beispielsweise eine unerwünschte Registrierung von Kommunikationsgeräten, die außerhalb des industriellen Automatisierungssystems nicht sichtbar sein sollen, zuverlässig unterbunden werden.

Entsprechend einer vorteilhaften Weiterbildung der vorliegenden Erfindung ist der zentrale Namensdienst-Agent in eine Kommunikationsnetz-Firewall integriert, die in das industrielle Automatisierungssystem eingehenden Datenverkehr auf Zulässigkeit überprüft. Dies ermöglicht eine besonders einfache Realisierung der vorliegenden Erfindung. Die dezentralen Namensdienst-Agenten können beispielsweise jeweils in ein Kommunikationsgerät innerhalb des industriellen Automatisierungssystems integriert sein.

Der erfindungsgemäße zentrale Namensdient-Agent eines industriellen Automatisierungssystems zur Durchführung eines vorangehend beschriebenen Verfahrens ist dafür ausgestaltet und eingerichtet, bei einer Meldung einer Kommunikationsnetzadresse eines Kommunikationsgeräts durch einen dezentralen Namensdienst-Agenten anhand der Regelbasis zu überprüfen, ob eine Name-Adress-Zuordnung eines Kommunikationsgeräts beim Kommunikationsnetz-Namensdienst zu registrieren ist. Außerdem ist der zentrale Namensdient-Agent dafür ausgestaltet und eingerichtet, bei einer zu registrierenden Name-Adress-Zuordnung eine die Name-Adress-Zuordnung umfassende Registrierungsanforderung zur Verarbeitung an einen Kommunikationsnetz-Namensdienst zu übermitteln.

Der erfindungsgemäße dezentrale Namensdient-Agent eines industriellen Automatisierungssystems zur Durchführung eines vorangehend beschriebenen Verfahrens ist dafür ausgestaltet und eingerichtet, innerhalb des industriellen Automatisierungssystems eine Kommunikationsnetzadresse eines zugeordneten Kommunikationsgeräts an einen zentralen Namensdienst-Agenten des industriellen Automatisierungssystems zu melden.

Die vorliegende Erfindung wird nahfolgend an einem Ausführungsbeispiel anhand der Zeichnung näher beschrieben. Es zeigt
- Figur 1: ein Kommunikationssystem mit einem Domain Name System, einem zentralen Namensdienst-Agenten und mehreren dezentralen Namensdienst-Agenten eines industriellen Automatisierungssystems,
- Figur 2: eine Detaildarstellung eines zentralen Namensdienst-Agenten.

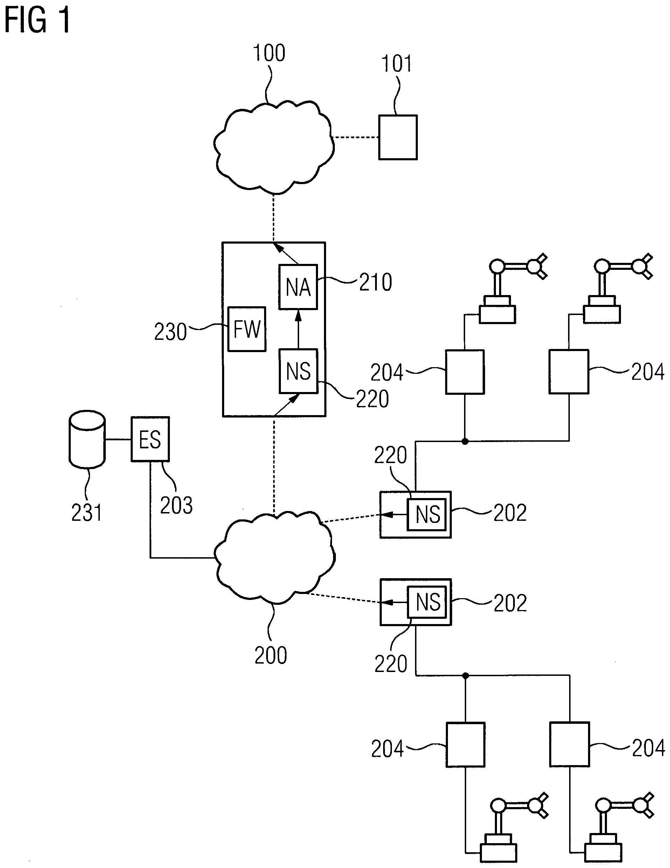

Das in Figur 1 dargestellte Kommunikationssystem umfasst ein öffentliches Internetprotokoll-basiertes Kommunikationsnetz 100 mit einem Domain Name System 101, durch das ein globaler Kommunikationsnetz-Namensdienst bereitgestellt wird, und ein Kommunikationsnetz 200 eines industriellen Automatisierungssystems, das mittels einer Firewall 201 gegenüber dem öffentlichen Kommunikationsnetz 100 gesichert ist. Die Firewall 201 überprüft insbesondere in das industrielle Automatisierungssystem eingehenden Datenverkehr und aus dem industriellen Automatisierungssystem ausgehenden Datenverkehr auf Zulässigkeit, beispielsweise auf Grundlage von Filterregeln. Zusätzlich zu einer Datenverkehr-Filterkomponente 230 umfasst die Firewall 201 einen zentralen Namensdienst-Agenten 210 des industriellen Automatisierungssystems.

Das industrielle Automatisierungssystem umfasst darüber hinaus eine Vielzahl an Automatisierungsgeräten 204, mehrere Kommunikationsgeräte 202 und ein Engineering-System 203 zur Überwachung und Projektierung der Automatisierungs- bzw. Kommunikationsgeräte 202, 204. In einer Regelbasis 231 des Engineering-Systems 203 wird geräteindividuell festgelegt, für welche Automatisierungs- bzw. Kommunikationsgeräte 202, 204 des industriellen Automatisierungssystems eine Registrierung ihres jeweiligen Gerätenamens im Domain Name System 101 zulässig bzw. erforderlich ist.

Die Automatisierungs- bzw. Kommunikationsgeräte 202, 204 konfigurieren sich hinsichtlich ihrer Kommunikationsnetzadressen selbständig anhand von Konfigurationsinformationen, die mittels Routerbekanntgaben innerhalb ihres jeweiligen Teilnetzes verbreitet werden. Diese Routerbekanntgaben sind im vorliegenden Ausführungsbeispiel entsprechend Internet Control Message Protocol, Version 6 übermittelte Router Advertisements, die ein Präfix umfassen, das von den Automatisierungs- bzw. Kommunikationsgeräten 202, 204 zur Bildung ihrer jeweiligen Kommunikationsnetzadresse entsprechend Internet Protocol, Version 6 für eine Stateless Address Autoconfiguration verwendet wird.

Die Kommunikationsgeräte 202 und auch die Firewall 201 umfassen jeweils einen dezentralen Namensdienst-Agenten 220. Mittels der dezentralen Namensdienst-Agenten 220 innerhalb des industriellen Automatisierungssystems werden Kommunikationsnetzadressen von Automatisierungs- bzw. Kommunikationsgeräten 202, 204 - beispielsweise bei einer Inbetriebnahme bzw. einem Austausch - an den zentralen Namensdienst-Agenten 210 des industriellen Automatisierungssystems gemeldet. Die dezentralen Namensdienst-Agenten 220 melden Kommunikationsnetzadressen vorzugsweise entsprechend Multicast Domain System Protocol (mDNS) an den zentralen Namensdienst-Agenten 210.

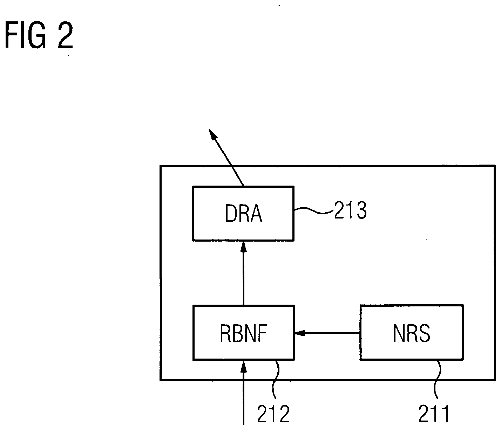

Bei einer Meldung einer Kommunikationsnetzadresse eines Automatisierungs- bzw. Kommunikationsgeräts 202, 204 überprüft der zentrale Namensdienst-Agent 210 anhand der Regelbasis 231, ob eine Name-Adress-Zuordnung des jeweiligen Automatisierungs- bzw. Kommunikationsgeräts beim globalen Kommunikationsnetz-Namensdienst zu registrieren ist. Die Regelbasis 231 wird vorzugsweise mittels des Engineering-Systems 203 erstellt und an den zentralen Namensdienst-Agenten 210 bereitgestellt bzw. verteilt. Entsprechend der Detaildarstellung gemäß Figur 2 umfasst der zentrale Namensdienst-Agent 210 jeweils dedizierte Komponenten 211, 212 für eine Bereitstellung der Regelbasis und deren Auswertung.

Der zentrale Namensdienst-Agent 210 übermittelt bei einer zu registrierenden Name-Adress-Zuordnung eine die Name-Adress-Zuordnung umfassende Registrierungsanforderung an das Domain Name System 101. Entsprechend Figur 2 umfasst der zentrale Namensdienst-Agent 210 hierfür eine dedizierte Registrierungskomponente 213.

Innerhalb des industriellen Automatisierungssystems umfasst nur der zentrale Namensdienst-Agent 210 Konfigurationsdaten für eine Anforderung einer Registrierung von Name-Adress-Zuordnungen beim globalen Kommunikationsnetz-Namensdienst. Dementsprechend übermittelt innerhalb des industriellen Automatisierungssystems nur der zentrale Namensdienst-Agent 210 Registrierungsanforderungen zur Verarbeitung an das Domain Name System 101. Der zentrale Namensdienst-Agent 210 aggregiert darüber hinaus Registrierungsanforderungen aus dem industriellen Automatisierungssystem und protokolliert eine Verarbeitung von Registrierungsanforderungen durch den globalen Kommunikationsnetz-Namensdienst.

## Patentansprüche

1. Verfahren zur Registrierung von Gerätenamen aus einem industriellen Automatisierungssystem bei einem Kommunikationsnetz-Namensdienst, bei dem
- mittels einer Regelbasis (231) geräteindividuell festgelegt wird, für welche Kommunikationsgeräte (202, 204) des industriellen Automatisierungssystems eine Registrierung ihres jeweiligen Gerätenamens beim Kommunikationsnetz-Namensdienst zulässig und/oder erforderlich ist,
- mittels geräteseitiger dezentraler Namensdienst-Agenten (220) innerhalb des industriellen Automatisierungssystems Kommunikationsnetzadressen von Kommunikationsgeräten (202, 204) an einen zentralen Namensdienst-Agenten (210) des industriellen Automatisierungssystems gemeldet werden,
- der zentrale Namensdienst-Agent (210) bei einer Meldung einer Kommunikationsnetzadresse eines Kommunikationsgeräts (202, 204) anhand der Regelbasis (231) überprüft, ob eine Name-Adress-Zuordnung eines Kommunikationsgeräts (202, 204) beim Kommunikationsnetz-Namensdienst zu registrieren ist,
- der zentrale Namensdienst-Agent (210) bei einer zu registrierenden Name-Adress-Zuordnung eine die Name-Adress-Zuordnung umfassende Registrierungsanforderung an den Kommunikationsnetz-Namensdienst übermittelt,
- innerhalb des industriellen Automatisierungssystems nur der zentrale Namensdienst-Agent (210) Registrierungsanforderungen zur Verarbeitung an den Kommunikationsnetz-Namensdienst übermittelt,
**dadurch gekennzeichnet, dass**
- die Regelbasis (231) mittels eines Projektierungssystems (203) für das industrielle Automatisierungssystem festgelegt und an den zentralen Namensdienst-Agenten (210) bereitgestellt wird,
- der zentrale Namensdienst-Agent (210) Registrierungsanforderungen aus dem industriellen Automatisierungssystem aggregiert und eine Verarbeitung von Registrierungsanforderungen durch den Kommunikationsnetz-Namensdienst hinsichtlich ihres Zustands protokolliert.

2. Verfahren nach Anspruch 1,
bei dem sich die Kommunikationsgeräte (202, 204) des industriellen Automatisierungssystems hinsichtlich ihrer Kommunikationsnetzadressen selbständig anhand von Konfigurationsinformationen konfigurieren, die mittels Routerbekanntgaben innerhalb ihres jeweiligen Teilnetzes (200) verbreitet werden.

3. Verfahren nach Anspruch 2,
bei dem die Routerbekanntgaben entsprechend Internet Control Message Protocol, Version 6 übermittelte Router Advertisements sind, die ein Präfix umfassen, das von den Kommunikationsgeräten (202, 204) des industriellen Automatisierungssystems zur Bildung ihrer jeweiligen Kommunikationsnetzadresse entsprechend Internet Protocol, Version 6 für eine Stateless Address Autoconfiguration verwendet wird.

4. Verfahren nach einem der Ansprüche 1 bis 3,
bei dem die dezentralen Namensdienst-Agenten (220) Kommunikationsnetzadressen entsprechend Multicast Domain System Protocol an den zentralen Namensdienst-Agenten (210) innerhalb des industriellen Automatisierungssystems melden.

5. Verfahren nach einem der Ansprüche 1 bis 4,
bei dem nur der zentrale Namensdienst-Agent (210) innerhalb des industriellen Automatisierungssystems Konfigurationsdaten für eine Anforderung einer Registrierung von Name-Adress-Zuordnungen beim Kommunikationsnetz-Namensdienst umfasst.

6. Verfahren nach einem der Ansprüche 1 bis 5,
bei dem der Kommunikationsnetz-Namensdienst durch ein Internetprotokoll-basiertes Domain Name System (101) bereitgestellt wird.

7. Verfahren nach einem der Ansprüche 1 bis 6,
bei dem der zentrale Namensdienst-Agent (210) in eine Kommunikationsnetz-Firewall (201) integriert ist, die in das industrielle Automatisierungssystem eingehenden Datenverkehr auf Zulässigkeit überprüft.

8. Verfahren nach einem der Ansprüche 1 bis 7,
bei dem die dezentralen Namensdienst-Agenten (220) jeweils in ein Kommunikationsgerät (202) innerhalb des industriellen Automatisierungssystems integriert sind.

## Claims

1. Method for registering device names from an industrial automation system with a communication network name service, in which
- a rule base (231) is used to determine, in a device-specific manner, the communication devices (202, 204) in the industrial automation system for which it is permissible and/or necessary to register their respective device name with the communication network name service,
- device-side decentralized name service agents (220) within the industrial automation system are used to report communication network addresses of communication devices (202, 204) to a central name service agent (210) of the industrial automation system,
- when a communication network address of a communication device (202, 204) is reported, the central name service agent (210) uses the rule base (231) to check whether a name/address assignment of a communication device (202, 204) should be registered with the communication network name service,
- in the case of a name/address assignment to be registered, the central name service agent (210) transmits a registration request comprising the name/address assignment to the communication network name service,
- within the industrial automation system, only the central name service agent (210) transmits registration requests for processing to the communication network name service, **characterized in that**
- the rule base (231) is determined by means of a project planning system (203) for the industrial automation system and is made available to the central name service agent (210),
- the central name service agent (210) aggregates registration requests from the industrial automation system and logs processing of registration requests by the communication network name service with respect to the state thereof.

2. Method according to Claim 1,
in which the communication devices (202, 204) in the industrial automation system are independently configured, with respect to their communication network addresses, on the basis of configuration information which is disseminated by means of router notifications within their respective subnetwork (200).

3. Method according to Claim 2,
in which the router notifications are router advertisements which are transmitted according to the Internet Control Message Protocol, Version 6, and comprise a prefix which is used by the communication devices (202, 204) in the industrial automation system to form their respective communication network address according to the Internet Protocol, Version 6, for Stateless Address Autoconfiguration.

4. Method according to one of Claims 1 to 3,
in which the decentralized name service agents (220) report communication network addresses to the central name service agent (210) within the industrial automation system according to the Multicast Domain System Protocol.

5. Method according to one of Claims 1 to 4,
in which only the central name service agent (210) within the industrial automation system comprises configuration data for a request to register name/address assignments with the communication network name service.

6. Method according to one of Claims 1 to 5,
in which the communication network name service is provided by an Internet Protocol-based Domain Name System (101).

7. Method according to one of Claims 1 to 6,
in which the central name service agent (210) is integrated in a communication network firewall (201) which checks data traffic arriving in the industrial automation system for admissibility.

8. Method according to one of Claims 1 to 7,
in which the decentralized name service agents (220) are each integrated in a communication device (202) within the industrial automation system.

## Revendications

1. Procédé d'enregistrement de dénominations d'appareil d'un système d'automatisation industriel dans un service de dénomination de réseau de communication, dans lequel
- au moyen d'une base (231) de règle, on fixe, d'une manière individuelle aux appareils, les appareils (202, 204) de communication du système d'automatisation industriel pour lesquels un enregistrement de leur dénomination d'appareil respectif est autorisé et/ou nécessaire dans le service de dénomination de réseau de communication,
- au moyen d'agents (220) de service de dénomination décentralisés du côté des appareils, on notifie, au sein du système d'automatisation industriel, des adresses de communication d'appareils (202, 204) de communication à un agent (210) de service de dénomination centralisé du système d'automatisation industriel,
- l'agent (210) de service de dénomination centralisé contrôle, lors d'une notification d'une adresse de réseau de communication d'un appareil (202, 204) de communication, à l'aide de la base (231) de règle, si une affectation d'adresse de dénomination d'un appareil (202, 204) de communication doit être enregistrée dans le service de dénomination de réseau de communication,
- l'agent (210) de service de dénomination centralisé transmet, pour une affectation d'adresse de dénomination à enregistrer, une demande d'enregistrement comprenant l'affectation d'adresse de dénomination au service de dénomination de réseau de communication,
- au sein du système d'automatisation industriel, seul l'agent (210) de service de dénomination centralisé transmet des demandes d'enregistrement à traiter au service de dénomination de réseau de communication,
**caractérisé en ce que**
- on fixe, pour le système d'automatisation industriel, la base (231) de règle au moyen d'un système (203) d'étude de projet et on la met à disposition de l'agent (210) de service de dénomination centralisé,
- l'agent (210) de service de dénomination centralisé agrège les demandes d'enregistrement provenant du système d'automatisation industriel et consigne un traitement de demandes d'enregistrement par le service de dénomination de réseau de communication en ce qui concerne son état.

2. Procédé suivant la revendication 1,
dans lequel on configure automatiquement les appareils (202, 204) de communication du système d'automatisation industriel, en ce qui concerne leur adresse de réseau de communication, à l'aide d'informations de configuration, qui sont diffusées au sein de son sous-réseau (200) respectif, au moyen de communiqués de routage.

3. Procédé suivant la revendication 2,
dans lequel les communiqués de routage sont des Routeurs Advertisements transmis conformément au protocole Internet Control Message, version 6, qui comprennent un préfixe, qui est utilisé par les appareils (202, 204) de communication du système d'automatisation industriel pour la formation de leur adresse de réseau de communication respective, conformément au protocole internet, version 6, pour une stateless address autoconfiguration.

4. Procédé suivant l'une des revendications 1 à 3,
dans lequel l'agent (220) de service de dénomination décentralisé notifie des adresses de réseau de communication conformément à protocole Multicast Domain System à l'agent (210) de service de dénomination centralisé au sein du système d'automatisation industriel.

5. Procédé suivant l'une des revendications 1 à 4,
dans lequel seul l'agent (210) de service de dénomination centralisé, au sein du système d'automatisation industriel, comprend des données de configuration, pour une demande d'enregistrement d'affectation d'adresse de dénomination, auprès du service de dénomination de réseau de communication.

6. Procédé suivant l'une des revendications 1 à 5,
dans lequel on met à disposition le service de dénomination de réseau de communication par un Domain Name System (101) reposant sur un protocole internet.

7. Procédé suivant l'une des revendications 1 à 6,
dans lequel l'agent (210) de service de dénomination centralisé est intégré dans un firewall (201) de réseau de communication, qui contrôle l'admissibilité du trafic de données entrant dans le système d'automatisation industriel.

8. Procédé suivant l'une des revendications 1 à 7,
dans lequel les agents (220) de service de dénomination décentralisés sont intégrés chacun dans un appareil (202) de communication au sein du système d'automatisation industriel.
